# EUROPÄISCHE PATENTSCHRIFT

(11) **EP 1 511 943 B1**
(45) Veröffentlichungstag und Bekanntmachung des Hinweises auf die Patenterteilung: **14.02.2007**
(21) Anmeldenummer: 03755087.8
(22) Anmeldetag: 10.04.2003
(51) Int. Cl.: F16D 1/072

(54) **BAUREIHE VON WELLEN UND VERFAHREN ZUR FERTIGUNG**
SERIES OF SHAFTS AND METHOD FOR MANUFACTURING THE SAME
GAMME DE FABRICATION D'ARBRES ET PROCEDE DE REALISATION

(30) Priorität: 24.05.2002 DE 10223298
(43) Veröffentlichungstag der Anmeldung: 09.03.2005
(73) Patentinhaber: SEW-EURODRIVE GMBH & CO., D-76646 Bruchsal (DE)
(72) Erfinder: HÄCKER, Uwe, 76356 Weingarten (DE)
(86) Internationale Anmeldenummer: PCT/EP2003/003709
(87) Internationale Veröffentlichungsnummer: WO 2003/100278

(56) Entgegenhaltungen:
- EP-A- 0 661 474
- EP-B- 0 784 758
- DE-A- 4 134 552
- US-A- 5 716 156

## Beschreibung

Die Erfindung betrifft eine Baureihe von Wellen und ein Verfahren zur Fertigung. Die Erfindung umfasst auch anstatt der Wellen entsprechend ausgeführte Schafte.

Aus der EP 0 339 380 B1 ist eine Vorrichtung zur koaxialen drehfesten Verbindung zweier Teile bekannt, bei der ein Quergewindestift zur axialen Fixierung eingesetzt wird. Die Vorrichtung ist jedoch aufwendig zu fertigen, da der Quergewindestift ein zusätzliches Teil darstellt und eine entsprechende, für diesen Quergewindestift geeignete Gewindebohrung zu fertigen ist.

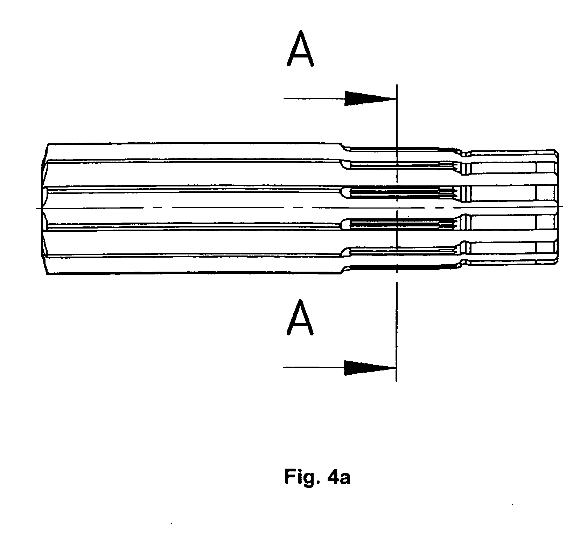

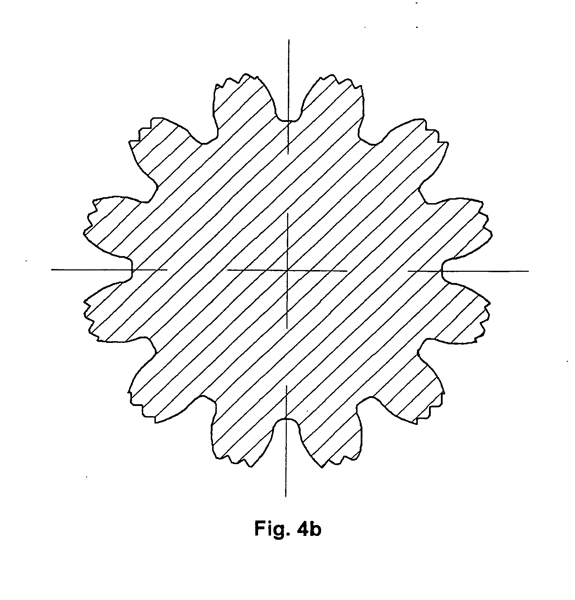

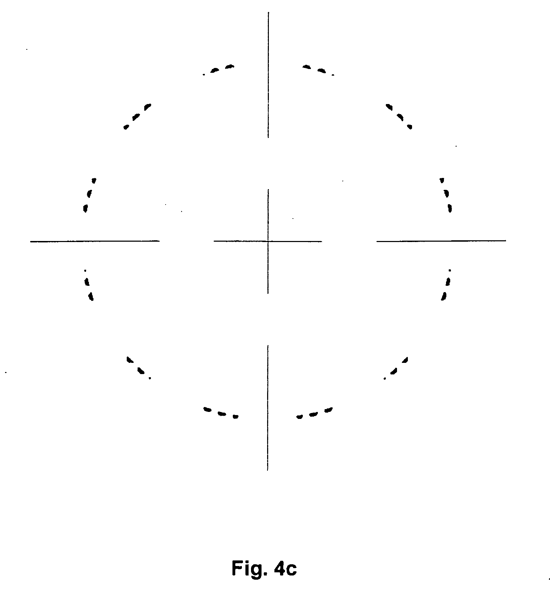

Aus der DE 37 32 223 C2 ist ein Presspassungsaufbau für eine Rotorwelle bekannt. Dabei wird eine Welle mit ihrem verzahnten Bereich eingeführt in eine Bohrung eines Aufnahmeteils, wobei beim formschlüssigen Einpressen Späne entstehen. Zum Sammeln der beim formschlüssigen Einpressen entstehenden Späne sind Ringnuten vorgesehen. Außerdem weist die Welle mindestens zwei Passbereiche (Fig. 4, 6, 7) auf. Die Fertigung des Presspassungsaufbaus ist somit insbesondere wegen der mindestens zwei Passbereiche und den Ringnuten aufwendig und kostspielig. Darüber hinaus ist es nachteilig, dass kein Pressitz zur Aufnahme von Axialkräften vorhanden ist. Axialkräfte führen sogar dazu, dass das Läuferpaket 8 auf Rückwände 4 treffen kann und Reibungsverluste erhöht sind.

Aus der DE 41 34 552 A1 ist eine Ritzel-Befestigung für Planetengetriebe bekannt, bei der ein Ritzel mit einem Passbereich und einer genormten, gehärteten und geschliffenen Rändelverzahnung versehen ist und in das Aufnahmeteil bei erhöhter Temperatur eingepresst wird. Zum Sammeln der Späne sind ebenfalls Ringnuten vorgesehen. Der Passbereich und die Verzahnung weisen verschiedene Außendurchmesser auf. Die Fertigung dieser Ritzel-Befestigung ist ebenfalls aufwendig und kostspielig, insbesondere wegen den Ringnuten und den verschiedenen Außendurchmessern der Verzahnung und des Passbereichs. Weiter nachteilig ist dabei, dass keine Wiedermontage einer schon vorher zusammengefügten Ritzelbefestigung ermöglicht ist. Denn auf Spalte 3, Zeile 12 der DE 41 34 552 A1 ist klar erwähnt, dass ein Presssitz vorgesehen ist. Dieser Presssitz, insbesondere im Bereich 5, und der Umstand, dass die axiale Länge des Bereiches 5 größer ist als die axiale Länge des Bereiches 3, bewirken, dass beim Ansetzen der Welle zur Wiedermontage ein Erfühlen des Einrastens der Verzahnung der Welle in die in der Bohrung schon vom ersten Zusammenfügen her eingepresste vorhandene Innenverzahnung nicht erfühlbar ist.

Aus der EP 0 784 758 B1 ist eine Wellen-Befestigung bekannt, die zwei Passbereiche (Fig. 1 und 2, Bereiche A und C) aufweist. Beim Einführen der Welle in die Bohrung eines Aufnahmeteils wird der Formschluss durch ein formschlüssigen Einpressen erreicht. Das Drehmoment wird von dem verzahnten oder gerändelten Bereich B übertragen. Nachteilig ist, dass der Bereich C kein Drehmoment übertragen kann. Relativbewegungen in den Bereichen A und C führen dabei zu Reibdauerbrüchen. Nachteilig ist weiter, dass zwei Passbereiche (Bereiche A und C) notwendig sind und somit eine große Baulänge notwendig ist. Außerdem ist die Fertigung zweier Passbereiche sehr kostspielig. Des Weiteren weist die Bohrung drei verschiedene Durchmesser auf, die ebenfalls aufwendig zu fertigen sind. Die notwendigen Bereiche A und C stellen ausschließliche Zentrierhilfen dar, die nichts zur Drehmomentübertragung beitragen.

Aus der EP 0 661 474 B1 ist eine Wellen-Befestigung bekannt, die ebenfalls zwei Passbereiche und eine Bohrung mit drei verschiedenen Durchmessern aufweist. Auch eine solche Wellen-Befestigung ist aufwendig zu fertigen. In einer anderen Variante derselben Schrift wird auch eine Wellenbefestigung mit nur zwei verschiedenen Durchmessern der Bohrung offenbart. Auch diese Variante ist kostspielig, da die Passbereiche und die Innenwände der Bohrung derart genau bearbeitet werden müssen, dass einerseits beim Einführen der Welle zum Einpressen in die Bohrung des Aufnahmeteils keine Späne entstehen und andererseits nach Einführen, also im eingepressten Zustand nach Montage, keine Zwischenräume zwischen der Welle und der Innenwand der Bohrung entstehen. Das Drehmoment wird von dem verzahnten oder gerändelten Bereich B übertragen. Nachteilig ist auch, dass der Bereich A kein Drehmoment übertragen kann. Die notwendigen Bereiche A und C stellen ausschließliche Zentrierhilfen für den Einpressvorgang dar, die nichts zur Drehmomentübertragung beitragen. Eine Wiedermontage ist nicht oder nur sehr schwer möglich, da der Bereich C länger ist als der Bereich B' des Aufnahmeteils.

Aus der EP 1 281 884 A2 ist eine Baureihe von Wellen 1 bekannt, die mit einem Aufnahmeteil verbindbar sind, das eine Bohrung 3 aufweist mit einem einzigen Bohrungsdurchmesser. Die Welle wird zumindest mit ihrem zylindrischen Bereich B2 und ihrem gerändelten Bereich B1 in diese Bohrung 3 eingepresst. Nachteilig ist dabei, dass eine Wiedermontage nur schwer möglich ist. Denn nachdem die Welle 1 in das Aufnahmeteil eingepresst wurde und dann wieder herausgezogen wurde, ist beim Erneuten Ansetzen der Welle zum Zwecke des Wiederverbindens ein Finden der Verzahnungsstellung unmöglich, da beim leicht angesetzer Welle die Rändelung im Bereich B1 außerhalb des Aufnahmeteils ist, und der zylindrische Bereich B2 mit Kraft einzupressen ist. Ist aber der zylindrische Bereich B2 tief wiedereingeführt in das Aufnahmeteil, ist ein Drehen der Welle 1 nur mit großer Kraft möglich. Somit ist es äußerst schwierig beim leichten Aufeinandertreffen der Rändelung des Bereiches B1 auf die vom ursprünglichen Verbinden erzeugte Innenrändelung des Aufnahmeteils und dann erfolgendem Drehen ein Einrasten der Rändelung in die Innenrändelung zu erfühlen. Denn die für das dafür notwendige Drehen benötigten Drehmomente sind groß und die vom Einrasten der Rändelung her stammenden Drehmomentschwankungen sind sehr klein. Somit ist eine Wiedermontage mit üblichen Mitteln, insbesondere das Finden des Einrastens von Hand, unmöglich.

Der Erfindung liegt daher die Aufgabe zugrunde, eine Wellen-Befestigung weiterzubilden, wobei die Fertigungs- und Lagerkosten gering gehalten werden sollen und daher die Wellen-Befestigung kostengünstig mit wenig Aufwand herstellbar sein soll.

Erfindungsgemäß wird die Aufgabe bei der Baureihe nach den in Anspruch 1, Welle nach Anspruch 16 oder 17 und bei dem Verfahren nach den in Anspruch 18 angegebenen Merkmalen gelöst.

Die Baureihe von Wellen zur Befestigung in einer Bohrung eines Aufnahmeteiles umfasst dabei mindestens zwei verschiedene Baugrößen, die jeweils verschiedene Varianten von Wellen umfassen.

Wesentliche Merkmale der Erfindung bei der Baureihe sind, dass
a) die Welle jeweils mindestens fünf axiale Bereiche A, B, C, D und F besitzt, die in alphabetischer Reihenfolge der sie bezeichnenden Buchstaben aneinandergrenzen und von denen F einen größeren Außendurchmesser als A, B und/oder C hat;
b) innerhalb einer Baugröße mehrere Varianten von Wellen umfasst sind, die im Bereich F der Welle jeweils verschieden verzahnt sind, insbesondere verschiedene Außendurchmesser aufweisen;
c) bei der Welle der Bereich C verzahnt und/oder gerändelt ist;
d) innerhalb einer ersten Baugröße mindestens bei einer ersten Variante die Welle im Bereich A und B nicht verzahnt ist;
e) innerhalb der ersten Baugröße bei mindestens einer zweiten Variante die durch die Zahnlücken der Verzahnung des Bereiches F gebildeten Ausnehmungen sich in ihren Fußzonen mindestens teilweise auch in den Bereich B oder in den Bereich B und A der Welle erstrecken;
f) die Bohrung im Aufnahmeteil mindestens in drei axial aneinandergrenzende Bereiche G', H' und J' aufgeteilt ist, wobei der Bereich G' bei in dem Aufnahmeteil befestigter Welle dem Bereich A zugeordnet ist und wobei der Bereich H' bei in dem Aufnahmeteil befestigter Welle dem Bereich C zugeordnet ist, und der Bereich J' sich an den Bereich H' anschließt;
g) die Bohrung im Aufnahmeteil im Bereich G' einen Innendurchmesser aufweist, der mathematisch gleich oder größer ist als ein Wert d;
h) der Wellenbereich A den aufnahmeteil-seitigen Teilbereich A1 und den sich an diesen anschließenden Teilbereich A2 umfasst, wobei der Teilbereich A1 einen Außendurchmesser aufweist, der dem Durchmesser d des Bereiches G' derart gleicht oder kleiner ist und der Außendurchmesser des Teilbereiches A2 derart gleich oder größer ist als der Außendurchmesser im Teilbereich A1, dass bei in dem Aufnahmeteil eingepresster Welle eine kraftschlüssige Verbindung vorgesehen ist;
i) der Wellenbereich B sich an den Bereich A2 anschließt und der Bereich C sich an den Bereich B anschließt, wobei der Außendurchmesser des Bereiches B kleiner ist als der Außendurchmesser des Bereiches. C;
j) bei in dem Aufnahmeteil eingepresster Welle diese mit ihrem verzahnten oder gerändelten Bereich C infolge des Einpressens der Welle formschlüssig in den Bereich H' der Bohrung eingeschnitten ist.

Vorteiligerweise überträgt die kraftschlüssige Verbindung im Bereich A2 auch Axialkräfte. Von Vorteil ist weiter, dass eine zentrische Aufnahme der zu befestigenden Welle oder des Schaftes, insbesondere Ritzelschaftes, geschaffen ist. Nach Einhalten entsprechend hoher Montagegenauigkeiten treten die Bereiche A, B, C, D und F während des Einpressens nacheinander in die Bohrung des Aufnahmeteils ein. Der Teilbereich A1 und der Bereich B zentrieren dabei vor und führen die Welle während der Montage. Da der Durchmesser des Bereiches A kleiner ist als der Innendurchmesser des Bereiches G', wird erst bei Eintreten des Bereiches A, insbesondere A2, der Welle eine genaue Zentrierung ermöglicht. Denn der Durchmesser des Bereiches A1 ist etwas kleiner ausführbar als der Außendurchmesser des Bereiches A2, insbesondere ein bis sechs Hundertstel. Somit führt bei weiterem Einpressen der Bereich A2 die Welle zentrisch. Dadurch ist vorteiligerweise eine hohe Stabilität gegen Querkräfte gegeben. Statt der erwähnten Durchmesser-Differenz im Bereich von ein bis sechs Hundertstel sind auch andere Durchmesserdifferenzen verwendbar, insbesondere unter Anwendung von Temperaturdifferenzen zwischen Aufnahmeteil und Welle beim Einpressen.

Durch die beschriebenen Bereiche A1 und B ist der Bereich A2 zusammen mit G' als Presspassung ausführbar, wobei wegen des nicht vorhandenen Spiels eine höhere Zentriergenauigkeit erreichbar ist. Daher ist weiter vorteilig, dass Axialkräfte im Bereich dieser Presspassung übertragbar sind.

Beim weiteren Einführen der Welle werden dann die Bereiche A, B und C eingepresst. Somit entsteht im gerändelten oder verzahnten Bereich C eine formschlüssige Verbindung.

Die eigentliche Kraft- und Drehmomentübertragung ist mittels der formschlüssigen Verbindung im Wesentlichen im Bereich C ermöglicht.

Der Außendurchmesser im Bereich B ist kleiner als der Außendurchmesser im Bereich C, beispielsweise ein bis drei Zehntel kleiner. A1 und B sind vorteiligerweise derart ausgeführt, dass bei der Montage beim Ansetzen ein ,Von Hand Einfädeln' möglich ist.

Weiterer Vorteil der Erfindung ist, dass die Fertigung der Welle vereinfacht und kostengünstig ist. Insbesondere ist das Überschleifen in einem Arbeitsgang ermöglicht, wobei der radiale Abstand des Bearbeitungswerkzeuges über den axialen Bereich hinweg anpassbar ist.

Von Vorteil ist außerdem, dass die Fertigungs- und Lagerkosten gering gehalten werden, weil keine Kupplungen zwischen der Welle, insbesondere umfassend getriebeseitige Laufverzahnung, und dem Aufnahmeteil notwendig sind. Daher ist die Wellen-Befestigung kostengünstig mit wenig Aufwand herstellbar.

Von Vorteil ist auch, dass das Aufnahmeteil an seinem Ende mit einer Zentriereinrichtung vorsehbar ist, die zur zentrischen Aufnahme der Welle dient. Weil die axiale Ausdehnung des Bereiches A gleich oder größer ist als der Bereich H', ist die Welle während des Einführens der Welle in die Bohrung des Aufnahmeteils, insbesondere beim Einpressen der Rändelung des Bereiches C in das Material des Aufnahmeteils im Bereich H', geführt, weil der Außendurchmesser des Einsteckritzels im Bereich B dem Innendurchmesser des Aufnahmeteils im Bereich H' zum Einfädeln anpassbar ist. Somit ist die Welle beim Einfädeln und Einführen zentrisch gehalten. Die Bereiche A1 und B bilden also eine Zentriereinrichtung und/oder Zweipunktlagerung beim Einführen.

Darüber hinaus weist die Bohrung nicht mehrere sondern nur zwei verschiedene, einfach zu fertigende Bohrungsinnendurchmesser auf, nämlich im Bereich G' einen kleineren als im Bereich H'.

Wesentlicher Vorteil ist auch, dass die zentrische Führung durch die entsprechend ausgelegten, zueinander liegenden Bereich A1 und G' mit zunehmendem Einführen der Welle stärker wird. Gleiches gilt dann bei weiter zunehmendem Einführen auch für A2 mit G'. Querkräfte bewirken bei zunehmendem Einführen also eine immer geringere radiale Auslenkung der Welle.

Weiterer Vorteil ist bei der Erfindung, dass die Welle in den Bereichen A,B und C möglichst groß ausführbar sind, insbesondere nur wenig kleiner als der Außendurchmesser des verzahnten Bereiches F. Dies führt zu einer hohen Festigkeit, insbesondere bei Torsion. Bei anderen Varianten der Baureihe ist allerdings der Außendurchmesser des Bereiches F erheblich größer ausführbar, da die Verzahnungsdaten sich entsprechend unterscheiden. In diesem Fall ist der Bereich D zur Verminderung der Kerbwirkung vorteilhaft. Ohne den Bereich D wäre die Welle dann nur zur Übertragung geringer Drehmomente und zur Aufnahme geringer Axialkräfte und/oder Radialkräfte verwendbar. Die genaue Form des Bereiches D ist durch Berechnungen mit Finite-Elemente-Methode optimierbar.

Weiterer Vorteil ist bei der Erfindung, dass die Ausnehmungen der Zahnlücken des Bereiches F über den Bereich D, C und in den Bereich B und verzahnungsdatenabhängig auch in den Bereich A hineinlaufen dürfen, ohne dass die Festigkeit oder andere wesentliche Eigenschaften der Wellen-Befestigung beachtenswert verschlechtert wären. Also ist auch mit der vorliegenden Erfindung die Verzahnung des Bereiches einfach und kostengünstig fertigbar bei gleichzeitig möglichst großem Durchmesser im Bereich C, B und A der Welle, also hoher Festigkeit. Die genaue Form des Verlaufes hängt von den Verzahnungsdaten des Bereiches F ab.

Wesentlicher Kern der Erfindung ist, dass vorteiligerweise mit einer nur einseitigen Führung beim Einführen eine ausreichend hohe Zentriergenauigkeit erreichbar ist. Die Größe der Zentriergenauigkeit reicht sogar für einen Servoantrieb aus, insbesondere bei der Verbindung des Servomotors mit dem Servogetriebe. Gerade bei einem mit dem Servomotor zu verbindenden, schnell laufenden Planetengetriebe ist nämlich eine hohe Genauigkeit einzuhalten. Bei weiteren erfindungsgemäßen Ausführungsformen ist die Welle im Bereich F sogar als Sonne der eintreibenden ersten Getriebestufe verwendbar. Dabei ist eine hohe Zentriergenauigkeit der Welle einzuhalten, da die Sonne der ersten Getriebestufe, insbesondere des schnell laufenden Servogetriebes; äußerst genau zu zentrieren ist.

Weiterer wesentlicher Vorteil ist bei der Erfindung, dass ein Wiedermontieren ermöglicht ist. Denn nachdem die Welle in das Aufnahmeteil eingepresst wurde und dann wieder herausgezogen wurde, ist beim Erneuten Ansetzen der Welle zum Zwecke des Wiederverbindens ein Finden der Verzahnungsstellung leicht möglich, da bei leicht angesetzter Welle, also an das Aufnahmeteil angesetzter Rändelung, im Bereich B und an das Aufnahmeteil angesetzter zylindrischer Endbereich A1 noch kein Presssitz vorhanden ist und somit die Welle noch leicht, insbesondere von Hand, gegenüber dem Aufnahmeteil verdrehbar ist. Rastet dann die vom ursprünglichen Verbinden erzeugte Innenrändelung des Aufnahmeteils und die Rändelung des Bereiches B und des Beginns des Bereiches C ein, ist dies erfühlbar. Denn die für das dafür notwendige Drehen benötigten Drehmomente sind klein und die vom Einrasten der Rändelung her stammenden Drehmomentschwankungen sind genügend groß. Somit ist eine Wiedermontage mit üblichen Mitteln, insbesondere das Finden des Einrastens von Hand, ermöglicht. Wesentlich ist dafür notwendig, dass im Wesentlichen die axiale Länge des Bereiches A2 kleiner gleich der axialen Länge des Bereiches H' des Aufnahmeteils ist.

Weiterer Vorteil gegenüber der EP 0 661 474 B1 ist, dass die Welle und das Aufnahmeteil axial kürzer ausführbar sind, weil der Bereich A der Welle der Figur 1 der EP 0 661 474 B1 für das Ausführen der vorliegenden Erfindung nicht notwendig ist.

Bei einer vorteilhaften Ausgestaltung sind innerhalb der Baugröße die im Bereich F verschieden verzahnten Varianten, also zumindest die erste Variante und die zweite Variante, jeweils in einem gleichen Aufnahmeteil befestigbar. Von Vorteil ist dabei, dass das Aufnahmeteil als eine Kupplung zur Verbindung mit einem Motor ausführbar ist, wobei die Kupplung für die verschiedenen Varianten immer gleich ausgeführt ist. Die Schnittstelle, also Verbindung, zwischen Welle und Aufnahmeteil ist also nur derart durch Verschneiden variiert, dass der Zapfen der Welle mit der Bohrung im Aufnahmeteil kraftschlüssig verbindbar ist unter Beibehaltung der erfindungsgemäßen Vorteile. Somit ist die getriebeseitige Verzahnung, also der verzahnte Bereich F, verschieden ausführbar und somit sind auch verschiedene Getriebeübersetzungen vorsehbar bei gleichem Aufnahmeteil. Der Motor wird dabei dann in derjenigen Baugröße gewählt, die zu der Baugröße des Getriebes passt, ohne Über- oder Unterdimensionierungen aufzuweisen.

Bei einer weiter vorteilhaften Ausgestaltung umfasst die Baureihe von Wellen innerhalb einer Baugröße Varianten, also zumindest die erste Variante und die zweite Variante, die im Bereich F gleich verzahnt sind und jeweils in verschieden großen Aufnahmeteilen, insbesondere Motorwellen von Motoren verschiedener Baugrößen, befestigbar sind. Von Vorteil ist dabei, dass das Getriebe direkt an Motoren einer Motoren-Baureihe, die mehrere Baugrößen von Motoren umfasst, anbaubar ist. Somit ist ein direktes Anschließen, also ein sogenannter Direktanbau, eines Getriebes an die verschiedenen Motoren, insbesondere an die verschieden großen Motorwellen der Motoren verschiedener Baugrößen innerhalb der Motoren-Baureihe. Durch diesen Direktanbau wird der gesamte Antrieb, umfassend Motor und Getriebe, kompakter und erfordert also weniger Bauvolumen. Außerdem ist auf diese Weise auch ein auf den ersten Blick überdimensioniert erscheinender Motor, also ein Vertreter einer großen Baugröße der Motoren-Baureihe, anschließbar, der dann aber mit reduzierten Betriebswerten, also nicht dem Nennmoment oder dem Spitzenmoment, betrieben wird. Dies bringt thermische und steuerungstechnische Vorteile. Insbesondere kann auch bei kurzen Taktzeiten ein großes Moment ans Getriebe übertragen werden. Um dieses Befestigen der Welle an verschieden großen Motorwellen ausführen zu können, ist nur die Welle in verschiedenen Varianten vorzuhalten. Eine spezielle Kupplung ist entbehrlich. Somit wird auch die Teilevielfalt reduziert und es werden die Lagerkosten und der Verwaltungsaufwand gesenkt.

Bei einer vorteilhaften Ausgestaltung ist im Bereich D ein radialer Übergang von dem etwas größeren Außendurchmesser des Bereiches F der Welle auf den etwas kleineren Außendurchmesser des Bereiches C vorgesehen. Vorteilhafterweise ist somit die Kerbwirkung und somit Versagensgefahr vermindert.

Bei einer vorteilhaften Ausgestaltung weist die Welle eine sogenannte Spiralnut im Bereich A zur Entlüftung auf, also eine sich am Umfang entlang schraubende Nut. Überraschend ist dabei, dass die Festigkeit nicht leidet, obwohl die Spiralnut im Bereich A. Die Spiralnut schneidet dabei die auslaufenden Ausnehmungen der Verzahnung des Bereiches F, die verzahnungsdatenabhängig ebenfalls bis in den Bereich A hineinlaufen. Da die Spiralnut darüber hinaus einfach und kostengünstig zu fertigen ist, ist eine Entlüftung beim Einführen der Welle erreicht, ohne dass die Festigkeit oder andere wesentliche Eigenschaften verschlechtert wären. Die Entlüftung hat den Vorteil zur Folge, dass die Zentrierung einfacher und mit geringeren Querkräften ausführbar ist.

Bei einer vorteilhaften Ausgestaltung ist die Verzahnung im Bereich F der Welle schräg verzahnt ausgeführt mit einem nichtverschwindenden Schrägungswinkel. Von Vorteil ist, dass somit besonders geräuscharme Getriebe herstellbar sind.

Bei einer vorteilhaften Ausgestaltung ist der Bereich J' der Bohrung gleichzeitig als Zentrierhilfe und Fertigungshilfe ausgeführt, insbesondere zur Verwendung bei der Werkstückaufnahme. Von Vorteil ist außerdem, dass das Aufnahmeteil beim Fertigen auf Spitzen aufspannbar ist und somit eine hohe Rundlaufgenauigkeit der Bohrung erzielbar ist. Diese Fertigungshilfe ist dabei derart ausführbar, dass sie gleichzeitig als Zentrierhilfe beim Einfädeln der Welle in die Bohrung des Aufnahmeteils verwendbar ist.

Bei einer vorteilhaften Ausgestaltung weist das Aufnahmeteil eine Montagenut auf zum Eingreifen und Abstützen eines Werkzeuges, mit der die Welle in das Aufnahmeteil einpressbar ist. Von Vorteil ist, dass somit die geforderte Zentriergenauigkeit beim Einpressen erreichbar ist.

Bei dem Verfahren zur Fertigung einer Wellen-Befestigung ist wesentlich, dass während des Einführens und/oder Einpressens eine Temperatur des Aufnahmeteils, insbesondere in seinem Inneren, und eine Temperatur der Welle, insbesondere in ihrem Inneren, ungleich sind, insbesondere unterscheidet sich die Temperatur des Aufnahmeteils und die Temperatur der Welle um mehr als 60 Kelvin. Von Vorteil ist dabei, dass eine besonders feste, in Teilbereichen des Bereiches A kraftschlüssige Verbindung nach Temperaturausgleich und dadurch bewirkter Schrumpfung entsteht. Überraschend ist dabei, dass je nach Auslegung die auf diese Weise entstandene Verbindung im Bereich A der Welle stärker vorsehbar ist, als die formschlüssige Verbindung im Bereich C.

Weitere vorteilhafte Ausgestaltungen ergeben sich aus den Unteransprüchen.

Die Erfindung wird nun anhand von Abbildungen näher erläutert:
In der Figur 1a ist eine Welle 1 und ein mit einer Bohrung 3 versehenes Aufnahmeteil 4 jeweils separat gezeigt.
In der Figur 1b ist die Welle 1 und das Aufnahmeteil 4 bei Montagebeginn, also beim Einfädeln der Welle in das Aufnahmeteil 4 gezeigt.
In der Figur 1c ist die Welle 1 und das Aufnahmeteil 4 bei Montageende, also im eingepressten befestigten Zustand, gezeigt.
In der Figur 2 ist der Anbau verschiedener Wellen der Baureihe an ein Aufnahmeteil, beispielsweise eine Kupplung, gezeigt. Dabei sind die verschiedenen Wellen jeweils einzeln mit Fig. 2a, Fig. 2b und Fig.2c gekennzeichnet.
In der Figur 3a, Figur 3b und Figur 3c ist der Anbau einer mit verschiedenen Zapfen ausgeführten Welle an entsprechend verschiedene Aufnahmeteile, beispielsweise als Direktanbau an verschiedene Motorwellen einer Motoren-Baureihe, gezeigt.

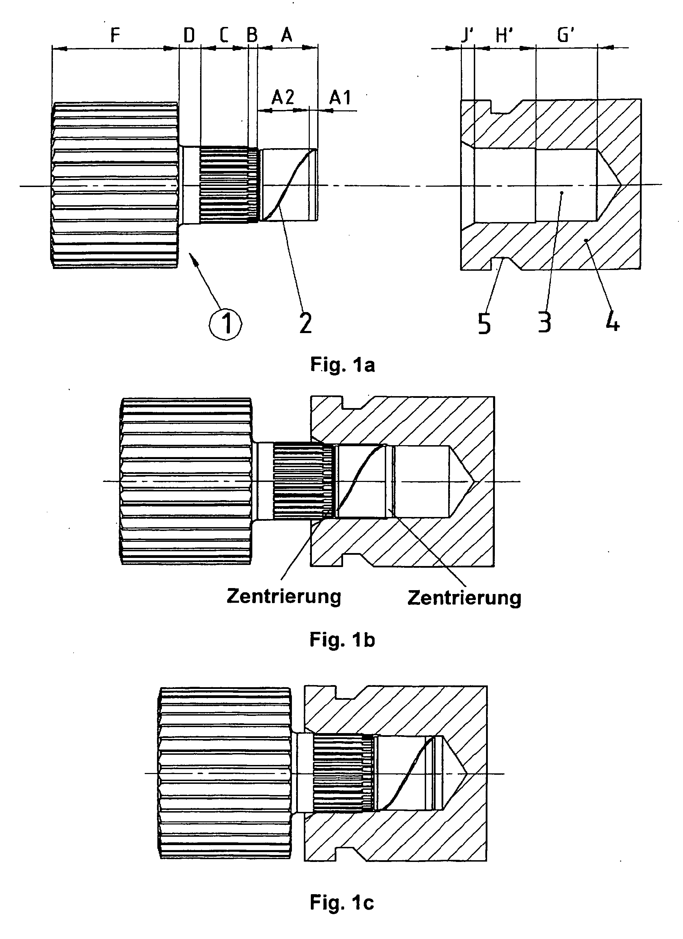

In der Figur 1a ist ein erstes erfindungsgemäßes Ausführungsbeispiel gezeigt. Dabei weist die Welle 1 an ihrem Aufnahmeteil-seitigen Ende einen zylindrische Bereiche A auf, wobei der Bereich A einen Teilbereich A1 und einen Teilbereich A2 umfasst. Der Außendurchmesser des Bereiches A1 ist etwas kleiner als im Teilbereich A2, damit ein Einfädeln in die Bohrung schnell und einfach ausführbar ist. An den Bereich A schließen sich gerändelte Bereich B und C an, wobei der Außendurchmesser im Bereich B zum schnellen und einfachen Einfädeln wiederum kleiner ist als im Bereich C. Der Außendurchmesser im Bereich B ist aber größer als der Außendurchmesser im Bereich A1 und A2. Bei der Fertigung werden die Bereiche B und C zuerst mit einem Rändel versehen, danach gehärtet und am Ende durch Überschleifen auf definierte Außendurchmesser gebracht.

Das Verzahnen, also Fertigen der Verzahnung, des Bereiches F umfasst die üblichen Fertigungsverfahren, wie insbesondere Fräsen unter Einsatz eines Fräsers oder Schleifen mittels einer Schleifscheibe. Wenn der Fusskreisradius der Verzahnung im Bereich F, also der jeweils tiefste Punkt der Zahnlücken, kleiner ist als der Außenradius, also der jeweils größte Radius, im Bereich D, C, B und A wird dabei auch in diesen benachbarten Bereich C und auch in den Bereich B zumindest teilweise eingeschnitten, weil das jeweilige Werkzeug auf einem Radius arbeitet. Die durch die Zahnlücken der Verzahnung des Bereiches F gebildeten Ausnehmungen erstrecken sich somit abhängig von den Verzahnungsdaten in ihren Fußzonen mindestens über die Bereiche D und C. Abhängig von den Verzahnungsdaten erstrecken sie sich auch in den Bereich B oder sogar in den Bereich A.

Die axiale Ausdehnung der sich erstreckenden Zahnlücken hängt vom Radius der Werkzeuge und von den Dimensionierungen und Abmessungen der Welle ab. Wenn der Fusskreisradius der Verzahnung im Bereich F größer ist als der Außenradius im Bereich B und A, wird in die Bereiche A und B keine Verzahnungslücke eingeschnitten.

Der Bereich C ist gerändelt und es verlaufen die Zahnlücken der Verzahnung durch den Bereich C. Der Bereich B ist ebenfalls gerändelt wie der Bereich C, wobei aber der Außendurchmesser reduziert ist gegenüber dem Außendurchmesser im Bereich C. Der Bereich D weist keine Rändelung auf. Somit ist für den Bereich B und C zum Erzeugen der Rändelung ein einfaches und kostengünstiges Werkzeug verwendbar.

Das Aufnahmeteil 4 weist eine Bohrung 3 auf, die mindestens zwei verschiedene Innendurchmesser in den beiden Bereichen G' und H' aufweist. Dabei ist die axiale Länge des wellenseitig angeordneten Bereiches H' abgestimmt auf die axiale Entfernung zwischen den Bereichen A1 und B. Insbesondere gleicht die axiale Länge von H' der axialen Länge von A2. Somit ist ein Einfädeln leicht möglich und eine Zweipunktlagerung ab Beginn des Einfädelns vorhanden, wobei die Zweipunktlagerung eine Zentrierung beim Montieren bildet. Die axiale Länge des Bereiches G' ist gleich oder größer als die axiale Länge des Bereiches A der Welle.

Der Innendurchmesser der Bohrung des Aufnahmeteils ist im Bereich G' größer oder gleich dem Wert d. Besonders geeignet ist die Toleranz H7. Der Bereich A1 der Welle weist einen kleineren Außendurchmesser als den Wert d auf. Insbesondere ist die Toleranz h6 geeignet. Im Bereich A2 wird zur Erzeugung einer kraftschlüssigen Verbindung mit dem Bereich G' der Bohrung ein etwas größerer Außendurchmesser als der Wert d verwendet. Somit wird beim Einpressen im Bereich A1 Material etwas verformt und eine hoch tragfähige, reibschlüssige Verbindung erzeugt. Allerdings.ist die Differenz des Wertes des Außendurchmessers und des Wertes des Innendurchmessers im Bereich G' zwischen 10 µm und 100µm, vorzugsweise 30 µm.

Die Verzahnung des Bereiches F ist bei einem ersten erfindungsgemäßen Ausführungsbeispiel mit einer Schrägverzahnung ausgeführt. Daher und wegen der reib- und kraftschlüssigen Verbindung im Bereich A1 und A2 ist ein besonders geräuscharmer Betrieb der den Bereich F umfassenden Getriebestufe ermöglicht.

Bei einem anderen erfindungsgemäßen Ausführungsbeispiel ist der Bereich F als Geradverzahnung ausgeführt zur Verwendung als Sonne bei einer eintreibenden Planetengetriebestufe.

In den gerändelten Bereich C wird bei der Fertigung der Verzahnung des Bereiches F eingeschnitten. Somit ist die Rändelung des Bereiches C unabhängig von den Verzahnungsdaten des Bereiches F immer gleich ausführbar. Dies hat zum Vorteil, dass beim Einführen der Welle 1 in die Bohrung 3 des Aufnahmeteils immer dieselbe Rändelung in das Aufnahmeteil eingedrückt wird und die somit geschaffene formschlüssige Verbindung zwischen Welle 1 und Aufnahmeteil 4 immer gleichartig ausgeführt ist. Es besteht also keinerlei Gefahr, dass diese Verbindung infolge ungünstiger Verzahnungsdaten des Bereiches F geschwächt würde. Insbesondere dürfen die Zähnezahlen des Bereiches C und des Bereiches F gleich sein, ohne dass die Position der Zähne am Umfang der Welle gegeneinander für die Verbindung von Bedeutung wäre.

Eine Spiralnut 2 ist im Bereich A zusätzlich eingebracht und dient zur Entlüftung beim Einführen der Welle 1 in die Bohrung 3 des Aufnahmeteils.

Beim Einführen der Welle in das Aufnahmeteil schneidet sich die harte Rändelung des Bereiches C in die Innenwand der Bohrung im Bereich H' ein. Der Durchmesser der Bohrung 3 im Bereich G' ist kleiner als der Durchmesser im Bereich H'.

Zwischen dem gerändelten Bereich C und dem mit Verzahnung versehenen Bereich F liegt ein Bereich D, der einen Übergangsbereich vom größeren Außendurchmesser der Welle im Bereich F auf den kleineren Außendurchmesser im Bereich C darstellt. Dieser Übergang ist in einem ersten erfindungsgemäßen Ausführungsbeispiel mit einem Radius realisierbar. In einem zweiten erfindungsgemäßen Ausführungsbeispiel umfasst dieser Übergang einen Übergangsbereich mit einem anderen Radius und axial viel ausgedehnteren linearen Übergangsbereich gemäß Figur 1 a, 1 b und 1 c.

In jedem Fall ist die Empfindlichkeit gegen Kerbwirkung verminderbar bei geeigneter Auslegung dieses Übergangs, insbesondere des Radius. Bei weiteren erfindungsgemäßen Ausführungsbeispielen sind andere Radien oder auch andere Formen beim Übergangsbereich vorteilhaft.

In Figur 1c ist außerdem gezeigt, dass bei einem erfindungsgemäßen Ausführungsbeispiel die Bohrung 3 im Aufnahmeteil derart tief ausgeführt ist, dass nach Montageende noch ein Hohlraum vorhanden ist. Bei anderen erfindungsgemäßen Ausführungsbeispielen entfällt dieser Hohlraum.

Bei weiteren erfindungsgemäßen Ausführungsbeispielen ist statt der Rändelung auch eine andere Verzahnung verwendbar. Unter Verzahnung ist immer zumindest auch eine Evolventenverzahnung zu verstehen.

Der Bereich J' der Bohrung 3 ist bei einem erfindungsgemäßen Ausführungsbeispiel zur Zentrierung kegelig mit einem Winkel von 60° ausgeführt. Diese Zentrierhilfe erleichtert das Einführen der Welle in die Bohrung 3 und vermindert somit Kosten und Aufwand. Bei weiteren erfindungsgemäßen Ausführungsbeispielen sind auch andere Winkel oder Zentrierhilfen vorteilhaft ausführbar. Gleichzeitig ist diese Zentrierhilfe als Fertigungshilfe zum Einspannen des Aufnahmeteils zwischen Spitzen verwendbar und somit eine vorteilige hohe Rundlaufgenauigkeit erreichbar.

Bei weiteren erfindungsgemäßen Ausführungsbeispielen ist das Aufnahmeteil von einer Kupplung oder einem Motor, insbesondere Elektromotor, umfasst. Insbesondere ist die Rotorwelle des Motors oder ein Wellenstück der Kupplung als erfindungsgemäßes Aufnahmeteil mit erfindungsgemäßer Bohrung ausgeführt.

Bei weiteren erfindungsgemäßen Ausführungsbeispielen ist das Welle eintreibendes Ritzel für ein Getriebe. Somit sind Teile eingespart und mit einem äußerst geringen Fertigungs- und Montageaufwand eine formschlüssige Verbindung geschaffen, die mit wenigen Teilen auskommt und schnell und einfach zu montieren ist.

Insbesondere ist bei weiteren erfindungsgemäßen Ausführungsbeispielen die Welle mit seinem Bereich F mindestens teilweise als Sonne eines Planetengetriebes einsetzbar. Diese direkte Ankoppelung erspart weitere Teile, wie Kupplungen oder dergleichen.

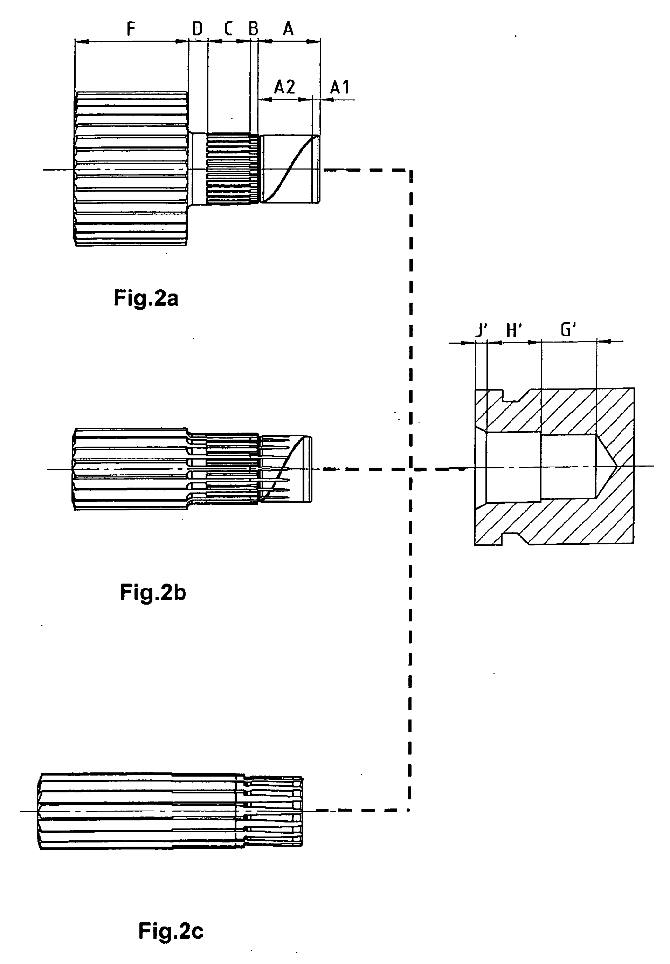

In der Figur 2 sind drei Varianten von Wellen mit den jeweils zugehörigen Aufnahmeteilen gezeigt. Die einzelnen Varianten der Wellen sind in Figur 2a, Figur 2b und Figur 2c dargestellt.

Zu allen Wellen gemäß Figuren 2a bis 2c ist immer dasselbe Aufnahmeteil verwendbar. Bei den drei verschiedenen Varianten ist der Verzahnungsbereich F verschieden ausgeführt. Somit ist die Welle in ein Getriebe einsetzbar, das je nach Variante verschiedene Übersetzungen aufweist. Das Aufnahmeteil ist als Kupplung zur Verbindung mit einem Motor ausführbar, wobei die Kupplung für die verschiedenen Varianten immer gleich ausgeführt ist. Die Schnittstelle, also Verbindung, zwischen Welle und Aufnahmeteil ist also wellenseitig derart durch Verschneiden variiert, dass der Zapfen der Welle mit der Bohrung im Aufnahmeteil kraftschlüssig verbindbar ist. Somit ist die getriebeseitige Verzahnung, also der verzahnte Bereich F, verschieden ausführbar und somit sind auch verschiedene Getriebeübersetzungen vorsehbar bei gleichem Aufnahmeteil. Der Motor wird dabei dann in derjenigen Baugröße gewählt, die zu der Baugröße des Getriebes passt, ohne Über- oder Unterdimensionierungen aufzuweisen. Durch die verschiedene Ausführung des Verzahnbereiches F bei den drei Varianten der Welle in Figur 2 erstrecken sich die Fußzonen der durch die Zahnlücken der Verzahnung des Bereiches F gebildeten Ausnehmungen je nach Fußkreisdurchmesser der Verzahnung im Bereich F bis in den Bereich A. Wenn, wie bei der ersten Variante nach Figur 2a, der Fußdurchmesser der Verzahnung im Bereich F größer ist als im Bereich A, B, C und D erfolgt kein Verschnitt dieser Bereiche.

Bei der zweiten Variante ist gemäß Figur 2b ein Verschnitt der Rändelung vorhanden, da die Fußzonen der durch die Zahnlücken der Verzahnung des Bereiches F gebildeten Ausnehmungen sich über den Bereich C erstrecken.

Bei der dritten Variante ist gemäß Figur 2c auf das Rändel im Bereich C verzichtet, weil die Verzahnungsdaten bei Figur 2c derart gewählt sind, dass die Verzahnung so groß vorgesehen ist, dass die durch die Zahnlücken der Verzahnung des Bereiches F gebildeten Ausnehmungen sich in ihren Fußzonen derart auf den Bereich C erstrecken, dass zuviel Material der Rändelung weggenommen würde. Daher ist das Rändel bei solchen Verzahnungsdaten verzichtbar. Die Kraftübertragung erfolgt somit über die sich in den Bereich C erstreckenden Zahnlücken der Verzahnung des Bereiches F beziehungsweise die entsprechend gebildeten Ausnehmungen.

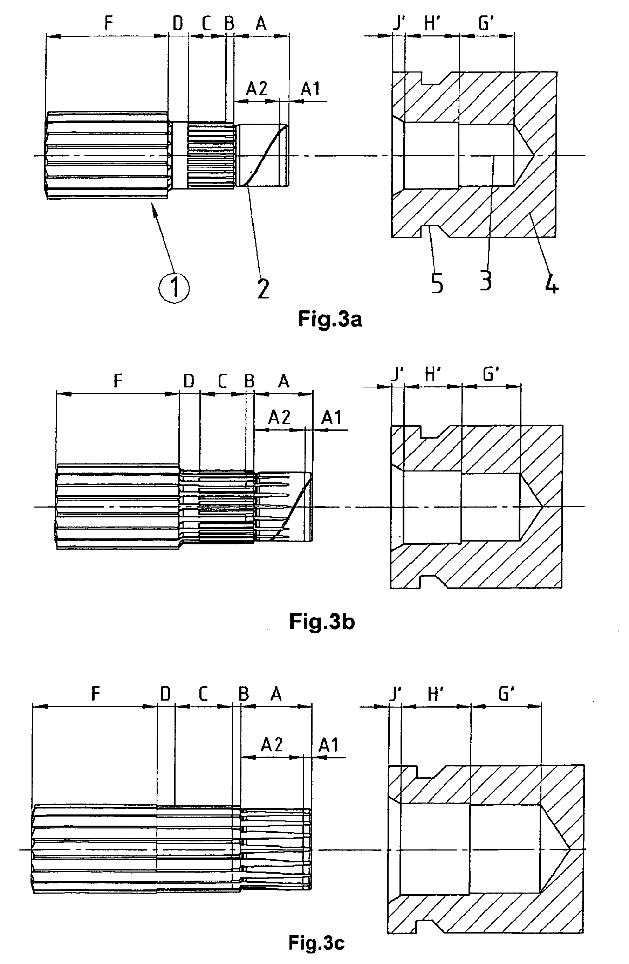

In der Figur 3 ist der sogenannte Direktanbau gezeigt.

Dabei sind in den Figuren 3a, 3b und 3c drei Varianten gezeigt, die zu einer Baugröße gehören und im Bereich F gleich verzahnt sind. Sie sind jeweils in verschieden großen Aufnahmeteilen, insbesondere Motorwellen von Motoren verschiedener Baugrößen, befestigbar. Bei den Motorwellen ist die Bohrung stets der Baugröße entsprechend groß ausgeführt, da nur so das maximal übertragbare Drehmoment übertragbar ist. Von Vorteil ist bei der Baureihe, dass das Getriebe direkt an Motoren einer Motoren-Baureihe, die gemäß Figur 3a bis 3c drei Baugrößen von Motoren umfasst, anbaubar ist. Somit ist ein direktes Anschließen, also ein sogenannter Direktanbau, eines Getriebes an die verschiedenen Motoren, insbesondere an die verschieden großen Motorwellen der Motoren verschiedener Baugrößen innerhalb der Motoren-Baureihe ausführbar. Durch diesen Direktanbau wird der gesamte Antrieb, umfassend Motor und Getriebe, kompakter und erfordert also weniger Bauvolumen. Außerdem ist auf diese Weise auch ein auf den ersten Blick überdimensioniert erscheinender Motor, also ein Vertreter einer großen Baugröße der Motoren-Baureihe, anschließbar, der dann aber mit reduzierten Betriebswerten, also nicht dem Nennmoment oder dem Spitzenmoment, betrieben wird. Dies bringt thermische und steuerungstechnische Vorteile. Insbesondere kann auch bei kurzen Taktzeiten ein großes Moment ans Getriebe übertragen werden. Um dieses Befestigen der Welle an verschieden großen Motorwellen ausführen zu können, ist nur die Welle in verschiedenen Varianten vorzuhalten. Eine spezielle Kupplung ist entbehrlich. Somit wird auch die Teilevielfalt reduziert und es werden die Lagerkosten und der Verwaltungsaufwand gesenkt. In der Figur 3a bis 3c sind je nach Baugröße des Aufnahmeteils, also der Motorwelle, die Wellenbereiche A, B, C und D entsprechend ausgeführt.

Bei einem anderen erfindungsgemäßen Ausführungsbeispiel wird auf die Rändelung im Bereich B und C ganz verzichtet, wobei dann der Fußkreisdurchmesser der Verzahnung im Bereich F kleiner ist als der Außendurchmesser im Bereich C. Somit übernimmt dann die Verzahnung und deren in den Bereich C laufenden Ausnehmungen die Funktion der Rändelung. Dabei ist zu beachten, dass die Verzahnungsdaten geeignet und somit das Zerspanvolumen genügend klein zu wählen ist, damit die Presskraft beim Einpressen der Welle in das Aufnahmeteil erzeugbar ist.

Unter Baureihe ist in dieser Schrift eine Menge von Vorrichtungen zu verstehen, die in Untermengen, die als Baugrößen bezeichnet werden, einteilbar oder klassifizierbar ist. Das Kriterium zur Einteilung kann geometrischer Art sein, wie beispielsweise Durchmesser einer Welle
und/oder Höhe einer Welle über der Bodenplatte: Es kann aber auch das Nennmoment, das maximal übertragbare Moment, die Antriebs-, Abtriebsleistung oder eine andere Kenngröße sein. Insbesondere sind auch Kriterien-Mischungen möglich. Statt Baureihe ist auch das Wort Baukasten verwendbar.

Die im Bereich C und B der Welle eingearbeitete Rändelung ist durch eine Zähnezahl N gekennzeichnet. Die Verzahnung im Bereich F ist durch die Zähnezahl Z gekennzeichnet. Wenn N und Z zumindest einen gemeinsamen Primfaktor p haben, weist der gemäß Figur 2b oder Figur 3b verschnittene Bereich C am Umfang eine Symmetrie auf. Denn nach einem Winkel 360° / p wiederholt sich die geometrische Ausformung am Umfang. Wenn die Zähnezahlen N und Z mehrere gemeinsame Primfaktoren aufweisen, ist die Symmetrie entsprechend höher. Beispielsweise ist bei Z = 24 = 2*2*2*3 und N= 12= 2*2*3 nach 30 ° am Umfang wieder dieselbe Ausformung zu erwarten. Die Symmetrie führt dazu, dass beim Einpressen der Welle in das Aufnahmeteil weniger Radialkräfte auftreten und somit das Einpressen mit höherer Zentriergenauigkeit ausführbar ist. Entsprechend einfacher und kostengünstiger ist auch das Einpresswerkzeug auslegbar.

Bei einer Zähnezahl Z = 24 = 2*2*2*3 und N= 21 = 3*7 liegt eine Symmetrie von 120° vor. Bei einer Zähnezahl Z = 24 = 2*2*2*3 und N= 22 = 2*11 liegt eine Symmetrie von 180° vor. Bei einer Zähnezahl Z = 24 = 2*2*2*3 und N= 20 = 2*2*5 liegt eine Symmetrie von 90° vor. Somit ist hier ein besonderer Vorteil bei der Wahl der Zähnezahl der Rändelung von N= 21 ± 1 ersichtlich. Denn bei der Herstellung der Rändelung ist die Anzahl der Zähne nur in kostspieliger Weise ganz genau festlegbar. Es kommt vor, dass bei ähnlichen aber nicht identischen Rohteilen die Zähnezahl um einen Zahn erhöht oder erniedrigt ist. Somit ist bei der genannten Wahl von Z=24 und N=20,21 oder 22 jeweils zumindest eine 180° Symmetrie vorhanden und somit der Einpressvorgang erleichtert und die Zentriergenauigkeit verbessert. Der genannte Vorteil gilt dann auch für Zähnezahlen Z, die Vielfache von 6 sind, also Z= 6, 12, 18, 24, 30 oder 36 und so weiter. Wesentlich ist also dabei, dass die drei benachbarten Zähnezahlen N= 20, 21 und 22 als Primfaktor zumindest entweder 2 oder 3 aufweisen, die beide zugleich Primfaktoren von 6 und deren Vielfachen sind.

In der Figur 4a ist als weiteres erfindungsgemäßes Ausführungsbeispiel eine Welle mit verschnittenem Bereich C gezeigt, wobei ein Schnitt mit A bezeichnet ist, der in Figur 4b gezeigt ist. Die Zähnezahl der Rändelung beträgt dabei N = 75. Die Zähnezahl der Verzahnung im Bereich F beträgt Z = 12. In der Figur ist zu sehen, dass im verschnittenen Bereich jeder Zahn mit drei Erhöhungen, also mit drei übrig bleibenden Zähnen der Rändelung, erhalten bleibt. Figur 4c zeigt die Bereiche, die in der Innenbohrung des Aufnahmeteils abgetragen oder verformt werden. Diese Bereiche weisen eine 120° Symmetrie auf. Somit ist das Einpressen einfach ausführbar. Die benachbarten Zahlen N= 76 oder N = 74 weisen jeweils zumindest die 2 als gemeinsamen Primfaktor und somit eine 180° Symmetrie auf mit entsprechendem Vorteil beim Einpressen.

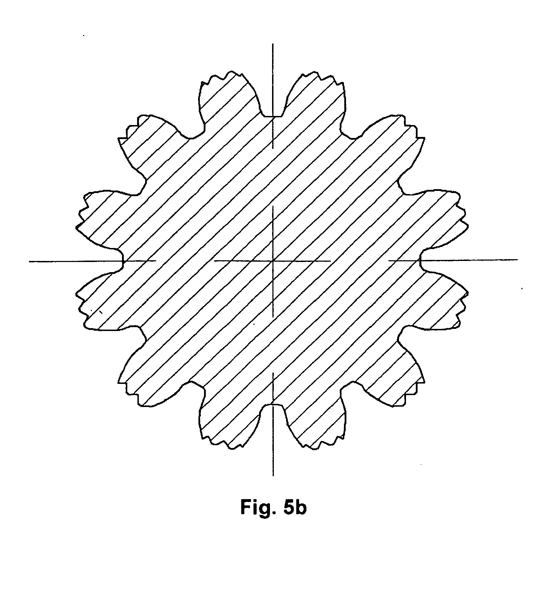

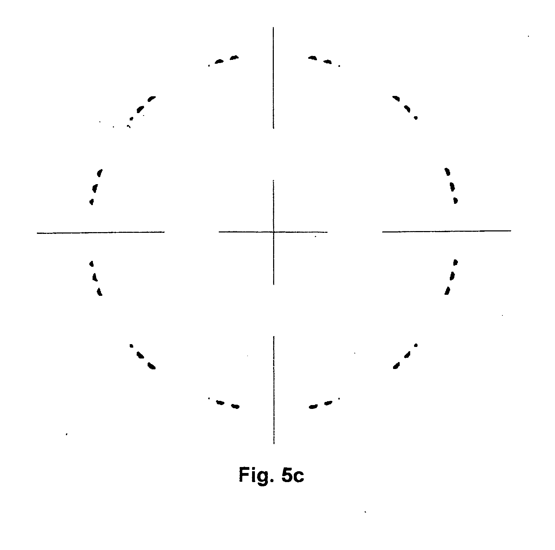

In der Figur 5b und 5c sind die den Figuren 4b und 4c entsprechenden Figuren bei einer Welle gezeigt, die eine Rändelungs-Zähnezahl N=74 aufweist.

### Bezugszeichenliste

- 1: Welle
- 2: Spiralnut
- 3: Bohrung
- 4: Aufnahmeteil
- 5: Montagenut

## Patentansprüche

1. Baureihe von Wellen zur Befestigung in einer Bohrung eines Aufnahmeteiles,
wobei die Baureihe mindestens zwei verschiedene Baugrößen umfasst, die jeweils verschiedene Varianten von Wellen umfassen,
**dadurch gekennzeichnet, dass**
a) die Welle jeweils mindestens fünf axiale Bereiche A, B, C, D und F besitzt, die in alphabetischer Reihenfolge der sie bezeichnenden Buchstaben aneinandergrenzen und von denen F einen größeren Außendurchmesser als A, B und/oder C hat;
b) innerhalb einer Baugröße mehrere Varianten von Wellen umfasst sind, die im Bereich F der Welle jeweils verschieden verzahnt sind, insbesondere verschiedene Außendurchmesser aufweisen;
c) bei der Welle der Bereich C verzahnt oder gerändelt ist;
d) innerhalb einer ersten Baugröße mindestens bei einer ersten Variante die Welle im Bereich A und B nicht verzahnt ist;
e) innerhalb der ersten Baugröße bei mindestens einer zweiten Variante die durch die Zahnlücken der Verzahnung des Bereiches F gebildeten Ausnehmungen sich in ihren Fußzonen mindestens teilweise auch in den Bereich B oder durch den Bereich B hindurch in den Bereich A der Welle hinein erstrecken;
f) die Bohrung im Aufnahmeteil mindestens in drei axial aneinandergrenzende Bereiche G', H' und J' aufgeteilt ist, wobei der Bereich G' bei in dem Aufnahmeteil befestigter Welle dem Bereich A zugeordnet ist und wobei der Bereich H' bei in dem Aufnahmeteil befestigter Welle dem Bereich C zugeordnet ist, und der Bereich J' sich an den Bereich H' anschließt;
g) die Bohrung im Aufnahmeteil im Bereich G' einen Innendurchmesser aufweist, der mathematisch gleich oder größer ist als ein Wert d;
h) der Wellenbereich A den aufnahmeteil-seitigen Teilbereich A1 und den sich an diesen anschließenden Teilbereich A2 umfasst, wobei der Teilbereich A1 einen Außendurchmesser aufweist, der dem Durchmesser d des Bereiches G' derart gleicht oder kleiner ist und der Außendurchmesser des Teilbereiches A2 derart gleich oder größer ist als der Außendurchmesser im Teilbereich A1, dass bei in dem Aufnahmeteil eingepresster Welle eine kraftschlüssige Verbindung vorgesehen ist;
i) der Wellenbereich B sich an den Bereich A2 anschließt und der Bereich C sich an den Bereich B anschließt, wobei der Außendurchmesser des Bereiches B kleiner ist als der Außendurchmesser des Bereiches C;
j) bei in dem Aufnahmeteil eingepresster Welle diese mit ihrem verzahnten oder gerändelten Bereich C infolge des Einpressens der Welle formschlüssig in den Bereich H' der Bohrung eingeschnitten ist.

2. Baureihe nach Anspruch 1,
**dadurch gekennzeichnet, dass**
innerhalb der Baugröße die im Bereich F verschieden verzahnten Varianten, also zumindest die erste Variante und die zweite Variante, jeweils in einem gleichen Aufnahmeteil befestigbar sind.

3. Baureihe nach Anspruch 1 oder 2,
**dadurch gekennzeichnet, dass**
die Baureihe von Wellen innerhalb einer Baugröße Varianten, also zumindest die erste Variante und die zweite Variante, umfasst, die im Bereich F gleich verzahnt sind und jeweils in verschieden großen Aufnahmeteilen, insbesondere Motorwellen von Motoren verschiedener Baugrößen, befestigbar sind.

4. Baureihe nach mindestens einem der vorangegangenen Ansprüche,
**dadurch gekennzeichnet, dass**
der Bereich C der Welle mit dem Bereich H' des Aufnahmeteils als formschlüssige Verbindung bei Überlast vorgesehen ist.

5. Baureihe nach mindestens einem der vorangegangenen Ansprüche,
**dadurch gekennzeichnet, dass**
die Verzahnung im Bereich F der Welle schräg verzahnt ausgeführt ist mit einem nichtverschwindenden Schrägungswinkel.

6. Baureihe nach mindestens einem der vorangegangenen Ansprüche,
**dadurch gekennzeichnet, dass**
der Bereich J' der Bohrung gleichzeitig als Zentrierhilfe und Fertigungshilfe ausgeführt ist.

7. Baureihe nach mindestens einem der vorangegangenen Ansprüche,
**dadurch gekennzeichnet, dass**
das Aufnahmeteil Teil einer Kupplung ist oder eine Motorwelle, insbesondere eines antreibenden Motors, ist.

8. Baureihe nach mindestens einem der vorangegangenen Ansprüche,
**dadurch gekennzeichnet, dass**
die Welle eintreibendes Ritzel für ein Getriebe, insbesondere Stirnradgetriebe, ist.

9. Baureihe nach mindestens einem der vorangegangenen Ansprüche,
**dadurch gekennzeichnet, dass**
der Bereich F mindestens teilweise als Sonne eines Planetengetriebes vorgesehen ist.

10. Baureihe nach mindestens einem der vorangegangenen Ansprüche,
**dadurch gekennzeichnet, dass**
das Aufnahmeteil eine Montagenut aufweist zum Eingreifen und Abstützen eines Werkzeuges, mit der die Welle in das Aufnahmeteil einpressbar ist.

11. Baureihe nach mindestens einem der vorangegangenen Ansprüche,
**dadurch gekennzeichnet, dass**
die Welle im Bereich A eine Spiralnut, also eine sich am Umfang entlang schraubende Nut, aufweist zum Druckausgleich oder Entlüften, insbesondere beim Einpressen der Welle in das Aufnahmeteil.

12. Baureihe nach mindestens einem der vorangegangenen Ansprüche,
**dadurch gekennzeichnet, dass**
die Welle im Bereich C nicht gerändelt ist sondern die Verzahnung des Bereiches F auch im Bereich C aufgebracht ist oder die durch die Zahnlücken der Verzahnung des Bereiches F gebildeten Ausnehmungen sich in ihren Fußzonen auch in den Bereich C erstrecken, also eine dritte Variante vorgesehen ist.

13. Baureihe nach mindestens einem der vorangegangenen Ansprüche,
**dadurch gekennzeichnet, dass**
die axiale Länge des Bereiches A2 kleiner gleich der axialen Länge des Bereiches H' des Aufnahmeteils ist.

14. Baureihe nach mindestens einem der vorangegangenen Ansprüche,
**dadurch gekennzeichnet, dass**
die axiale Länge des Bereiches A2 plus die axiale Länge des Bereiches B kleiner gleich der axialen Länge des Bereiches H' des Aufnahmeteils ist.

15. Baureihe nach mindestens einem der vorangegangenen Ansprüche,
**dadurch gekennzeichnet, dass**
die Zähnezahl N der Rändelung im Bereich C eine von drei benachbarten Zahlen n, n+1, n-1 ist, die jeweils mindestens zwei Primfaktoren aufweisen,
wobei die Zähnezahl Z der Verzahnung im Bereich F mit jeder der drei benachbarten Zahlen n, n+1, n-1 jeweils mindestens einen gemeinsamen Primfaktor aufweisen.

16. Welle zur Befestigung in einer Bohrung eines Aufnahmeteiles,
**dadurch gekennzeichnet, dass**
a) die Welle jeweils mindestens fünf axiale Bereiche A, B, C, D und F besitzt, die in alphabetischer Reihenfolge der sie bezeichnenden Buchstaben aneinandergrenzen und von denen F einen größeren Außendurchmesser als A, B und/oder C hat;
b) bei der Welle der Bereich C verzahnt und/oder gerändelt ist;
c) die Welle im Bereich D, A und B nicht verzahnt ist;
d) die Bohrung im Aufnahmeteil mindestens in drei axial aneinandergrenzende Bereiche G', H' und J' aufgeteilt ist, wobei der Bereich G' bei in dem Aufnahmeteil befestigter Welle dem Bereich A zugeordnet ist und wobei der Bereich H' bei in dem Aufnahmeteil befestigter Welle dem Bereich C zugeordnet ist, und der Bereich J' sich an den Bereich H' anschließt;
e) die Bohrung im Aufnahmeteil im Bereich G' einen Innendurchmesser aufweist, der mathematisch gleich oder größer ist als ein Wert d;
f) der Wellenbereich A den aufnahmeteil-seitigen Teilbereich A1 und den sich an diesen anschließenden Teilbereich A2 umfasst, wobei der Teilbereich A1 einen Außendurchmesser aufweist, der dem Durchmesser d des Bereiches G' derart gleicht oder kleiner ist und der Außendurchmesser des Teilbereiches A2 derart gleich oder größer ist als der Außendurchmesser im Teilbereich A1, dass bei in dem Aufnahmeteil eingepresster Welle eine kraftschlüssige Verbindung vorgesehen ist;
g) der Wellenbereich B sich an den Bereich A2 anschließt und der Bereich C sich an den Bereich B anschließt, wobei der Außendurchmesser des Bereiches B kleiner ist als der Außendurchmesser des Bereiches C;
h) bei in dem Aufnahmeteil eingepresster Welle diese mit ihrem verzahnten oder gerändelten Bereich C infolge des Einpressens der Welle formschlüssig in den Bereich H' der Bohrung eingeschnitten ist.

17. Welle zur Befestigung in einer Bohrung eines Aufnahmeteiles,
**dadurch gekennzeichnet, dass**
a) die Welle jeweils mindestens fünf axiale Bereiche A, B, C, D und F besitzt, die in alphabetischer Reihenfolge der sie bezeichnenden Buchstaben aneinandergrenzen und von denen F einen größeren Außendurchmesser als A, B und/oder C hat;
b) bei der Welle der Bereich C verzahnt und/oder gerändelt ist;
c) die durch die Zahnlücken der Verzahnung des Bereiches F gebildeten Ausnehmungen sich in ihren Fußzonen durch die Bereiche D, C und mindestens teilweise auch in den Bereich B oder in den Bereich B und A der Welle erstrecken;
d) die Bohrung im Aufnahmeteil mindestens in drei axial aneinandergrenzende Bereiche G', H' und J' aufgeteilt ist, wobei der Bereich G' bei in dem Aufnahmeteil befestigter Welle dem Bereich A zugeordnet ist und wobei der Bereich H' bei in dem Aufnahmeteil befestigter Welle dem Bereich C zugeordnet ist, und der Bereich J' sich an den Bereich H' anschließt;
e) die Bohrung im Aufnahmeteil im Bereich G' einen Innendurchmesser aufweist, der mathematisch gleich oder größer ist als ein Wert d;
f) der Wellenbereich A den aufnahmeteil-seitigen Teilbereich A1 und den sich an diesen anschließenden Teilbereich A2 umfasst, wobei der Teilbereich A1 einen Außendurchmesser aufweist, der dem Durchmesser d des Bereiches G' derart gleicht oder kleiner ist und der Außendurchmesser des Teilbereiches A2 derart gleich oder größer ist als der Außendurchmesser im Teilbereich A1, dass bei in dem Aufnahmeteil eingepresster Welle eine kraftschlüssige Verbindung vorgesehen ist;
g) der Wellenbereich B sich an den Bereich A2 anschließt und der Bereich C sich an den Bereich B anschließt, wobei der Außendurchmesser des Bereiches B kleiner ist als der Außendurchmesser des Bereiches C;
h) bei in dem Aufnahmeteil eingepresster Welle diese mit ihrem verzahnten oder gerändelten Bereich C infolge des Einpressens der Welle formschlüssig in den Bereich H' der Bohrung eingeschnitten ist.

18. Verfahren zur Fertigung einer Wellen-Befestigung nach mindestens einem der vorangegangenen Ansprüche,
wobei
während des Einführens und/oder Einpressens eine Temperatur des Aufnahmeteils, insbesondere in seinem Inneren, und eine Temperatur der Welle, insbesondere in ihrem Inneren, ungleich sind.

19. Verfahren nach mindestens einem der vorangegangenen Ansprüche,
**dadurch gekennzeichnet, dass**
die Temperatur des Aufnahmeteils und die Temperatur der Welle sich um mehr als 60 Kelvin unterscheiden.

## Claims

1. Series of shafts for fixing in a bore of a receiving part,
the series including at least two different sizes, each size including different variants of shafts,
**characterised in that**
a) the shaft has, in each instance, at least five axial regions A, B, C, D, and F, which are adjacent in the alphabetical order of the letters denoting them, and of which F has a greater outer diameter than A, B, and/or C;
b) included within a size are a plurality of variants of shafts which are each differently toothed in region F of the shaft, in particular have different outer diameters;
c) region C of the shaft is toothed or knurled;
d) within a first size, at least in a first variant, the shaft is not toothed in regions A and B;
e) within the first size in at least a second variant, the root zones of the recesses formed by the tooth spaces of the toothing of region F also extend at least partially into region B or through region B into region A of the shaft;
f) the bore in the receiving part is divided up into at least three axially adjacent regions G', H' and J', region G' being assigned to region A when the shaft is fixed in the receiving part, and region H' being assigned to region C when the shaft is fixed in the receiving part, and region J' adjoining region H';
g) in region G', the bore in the receiving part has an inner diameter which is mathematically equal to or greater than a value d;
h) shaft region A includes sub-region A1 on the side of the receiving part and sub-region A2 adjoining it, sub-region A1 having an outer diameter which is equal to or less than diameter d of region G', and the outer diameter of sub-region A2 being equal to or greater than the outer diameter in sub-region A1, so that a force-locked connection is provided when the shaft is pressed into the receiving part;
i) shaft region B adjoins region A2, and region C adjoins region B, the outer diameter of region B being less than the outer diameter of region C;
j) when the shaft is pressed into the receiving part, toothed or knurled region C of the shaft cuts into region H' of the bore in a form-locked manner as a result of the shaft being pressed in.

2. Series according to Claim 1,
**characterised in that**
within the size the variants differently toothed in region F, i.e., at least the first variant and the second variant, may each be fixed in an identical receiving part.

3. Series according to Claim 1 or 2,
**characterised in that**
the series of shafts includes, within a size, variants, i.e., at least the first variant and the second variant, which are identically toothed in region F and may each be fixed in different-sized receiving parts, in particular, motor shafts of motors of different sizes.

4. Series according to at least one of the preceding claims,
**characterised in that**
region C of the shaft is provided as a form-locked connection with region H' of the receiving part in the event of an overload.

5. Series according to at least one of the preceding claims,
**characterised in that**
the toothing in region F of the shaft is helically designed, having a non-vanishing helix angle.

6. Series according to at least one of the preceding claims,
**characterised in that**
region J' of the bore is simultaneously designed as a centring aid and manufacturing aid.

7. Series according to at least one of the preceding claims,
**characterised in that**
the receiving part is part of a coupling or is a motor shaft, in particular of a driving motor.

8. Series according to at least one of the preceding claims,
**characterised in that**
the shaft is a driving pinion for a gearing, in particular spur gearing.

9. Series according to at least one of the preceding claims,
**characterised in that**
region F is provided at least partially as a sun of a planetary gearing.

10. Series according to at least one of the preceding claims,
**characterised in that**
the receiving part has a mounting groove for engaging with and supporting a tool, by which the shaft may be pressed into the receiving part.

11. Series according to at least one of the preceding claims,
**characterised in that**
the shaft has a helical groove in region A, i.e. a groove spiralling along the circumference, for purposes of pressure equalisation or venting, in particular when the shaft is being pressed into the receiving part.

12. Series according to at least one of the preceding claims,
**characterised in that**
the shaft is not knurled in region C, but the toothing of region F is also formed in region C or the root zones of the recesses formed by the tooth spaces of the toothing of region F also extend into region C, i.e. a third variant is provided.

13. Series according to at least one of the preceding claims,
**characterised in that**
the axial length of region A2 is less than or equal to the axial length of region H' of the receiving part.

14. Series according to at least one of the preceding claims,
**characterised in that**
the axial length of region A2 plus the axial length of region B is less than or equal to the axial length of region H' of the receiving part.

15. Series according to at least one of the preceding claims,
**characterised in that**
the number N of teeth of the knurling in region C is one of three adjacent numbers n, n+1, n-1, which each have at least two prime factors,
the number Z of teeth of the toothing in region F having in each case at least one common prime factor with each of the three adjacent numbers n, n+1, n-1.

16. Shaft for fixing in a bore of a receiving part,
**characterised in that**
a) the shaft has, in each instance, at least five axial regions A, B, C, D, and F, which are adjacent in the alphabetical order of the letters denoting them, and of which F has a greater outer diameter than A, B, and/or C;
b) region C of the shaft is toothed and/or knurled;
c) the shaft is not toothed in region D, A and B;
d) the bore in the receiving part is divided up into at least three axially adjacent regions G', H' and J', region G' being assigned to region A when the shaft is fixed in the receiving part, and region H' being assigned to region C when the shaft is fixed in the receiving part, and region J' adjoining region H';
e) in region G', the bore in the receiving part has an inner diameter which is mathematically equal to or greater than a value d;
f) shaft region A includes sub-region A1 on the side of the receiving part and sub-region A2 adjoining it, sub-region A1 having an outer diameter which is equal to or less than diameter d of region G', and the outer diameter of sub-region A2 being equal to or greater than the outer diameter in sub-region A1, so that a force-locked connection is provided when the shaft is pressed into the receiving part;
g) shaft region B adjoins region A2, and region C adjoins region B, the outer diameter of region B being less than the outer diameter of region C;
h) when the shaft is pressed into the receiving part, toothed or knurled region C of the shaft cuts into region H' of the bore in a form-locked manner as a result of the shaft being pressed in.

17. Shaft for fixing in a bore of a receiving part,
**characterised in that**
a) the shaft has, in each instance, at least five axial regions A, B, C, D, and F, which are adjacent in the alphabetical order of the letters denoting them, and of which F has a greater outer diameter than A, B, and/or C;
b) region C of the shaft is toothed and/or knurled;
c) the root zones of the recesses formed by the tooth spaces of the toothing of region F extend through regions D, C and also at least partially into region B or into region B and A of the shaft;
d) the bore in the receiving part is divided up into at least three axially adjacent regions G', H' and J', region G' being assigned to region A when the shaft is fixed in the receiving part, and region H' being assigned to region C when the shaft is fixed in the receiving part, and region J' adjoining region H';
e) in region G', the bore in the receiving part has an inner diameter which is mathematically equal to or greater than a value d;
f) shaft region A includes sub-region A1 on the side of the receiving part and sub-region A2 adjoining it, sub-region A1 having an outer diameter which is equal to or less than diameter d of region G', and the outer diameter of sub-region A2 being equal to or greater than the outer diameter in sub-region A1, so that a force-locked connection is provided when the shaft is pressed into the receiving part;
g) shaft region B adjoins region A2, and region C adjoins region B, the outer diameter of region B being less than the outer diameter of region C;
h) when the shaft is pressed into the receiving part, toothed or knurled region C of the shaft cuts into region H' of the bore in a form-locked manner as a result of the shaft being pressed in.

18. Method for manufacturing a shaft fixing according to at least one of the preceding claims,
in which
during the insertion and/or pressing-in, a temperature of the receiving part, in particular in its interior, and a temperature of the shaft, in particular in its interior, are not equal.

19. Method according to at least one of the preceding claims,
**characterised in that**
the temperature of the receiving part and the temperature of the shaft differ by more than 60 kelvin.

## Revendications

1. Gamme de fabrication d'arbres à fixer dans un perçage d'une pièce réceptrice, sachant que la gamme de fabrication comprend au moins deux tailles différentes, qui comprennent chacune différentes variantes d'arbres, **caractérisée en ce que**
a) chaque arbre possède au moins cinq régions axiales A, B, C, D et F, qui sont contiguës dans l'ordre alphabétique des lettres qui les désignent et parmi lesquelles F possède un plus grand diamètre extérieur que A, B et/ou C ;
b) une taille comprend plusieurs variantes d'arbres qui sont respectivement différemment dentés dans la région F de l'arbre, notamment qui présentent des diamètres extérieurs différents ;
c) la région C de l'arbre est dentée ou moletée ;
d) dans une première taille, au moins pour une première variante, l'arbre n'est pas denté dans les régions A et B ;
e) dans la première taille, pour au moins une deuxième variante, les évidements formés par les entredents de la denture de la région F s'étendent dans leurs zones de base au moins partiellement à l'intérieur de la région B de l'arbre ou à l'intérieur de la région A de l'arbre en traversant la région B ;
f) le perçage de la pièce réceptrice est divisé au moins en trois régions axialement contiguës G', H' et J', sachant que la région G' est associée à la région A de l'arbre fixé dans la pièce réceptrice et la région H' à la région C de l'arbre fixé dans la pièce réceptrice, et que la région J' fait suite à la région H' ;
g) le perçage de la pièce réceptrice présente dans la région G' un diamètre intérieur qui est mathématiquement supérieur ou égal à une valeur d ;
h) la région A de l'arbre comprend la région partielle A1 côté pièce réceptrice et la région partielle A2 qui fait suite à la précédente, sachant que la région partielle A1 présente un diamètre extérieur qui est inférieur ou égal au diamètre d de la région G' de telle sorte, et que le diamètre extérieur de la région partielle A2 est supérieur ou égal au diamètre extérieur de la région partielle A1 de telle sorte, qu'on obtient une liaison à force lorsque l'arbre est emmanché dans la pièce réceptrice ;
i) la région B de l'arbre fait suite à la région A2 et la région C fait suite à la région B, sachant que le diamètre extérieur de la région B est inférieur au diamètre extérieur de la région C ;
j) lorsque l'arbre est emmanché dans la pièce réceptrice, il s'incise en engagement positif dans la région H' du perçage par sa région dentée ou moletée C.

2. Gamme de fabrication selon la revendication 1, **caractérisée en ce que**, dans la taille considérée, les variantes différemment dentées dans la région F, donc au moins la première variante et la deuxième variante, peuvent être respectivement fixées dans une pièce réceptrice identique.

3. Gamme de fabrication selon la revendication 1, **caractérisée en ce que** la gamme de fabrication d'arbres comprend à l'intérieur d'une taille des variantes, donc au moins la première variante et la deuxième variante, qui présentent une denture identique dans la région F et qui peuvent être respectivement fixées dans des pièces réceptrices de tailles différentes, notamment des arbres de moteurs de tailles différentes.

4. Gamme de fabrication selon la revendication 1, **caractérisée en ce que** la région C de l'arbre est prévue comme liaison positive avec la région H' de la pièce réceptrice en cas de surcharge.

5. Gamme de fabrication selon la revendication 1, **caractérisée en ce que** la denture dans la région F de l'arbre est réalisée oblique avec un angle d'inclinaison jamais égal à zéro.

6. Gamme de fabrication selon la revendication 1, **caractérisée en ce que** la région J' du perçage est simultanément conçue comme aide de centrage et aide de fabrication.

7. Gamme de fabrication selon la revendication 1, **caractérisée en ce que** la pièce réceptrice fait partie d'un accouplement ou est un arbre de moteur, notamment d'un moteur d'entraînement.

8. Gamme de fabrication selon la revendication 1, **caractérisée en ce que** l'arbre est un pignon menant pour un engrenage, notamment un engrenage droit.

9. Gamme de fabrication selon la revendication 1, **caractérisée en ce que** la région F est prévue au moins partiellement comme roue solaire d'un engrenage planétaire.

10. Gamme de fabrication selon la revendication 1, **caractérisée en ce que** la pièce réceptrice présente une rainure de montage pour l'engagement et le soutien d'un outil par lequel l'arbre peut être emmanché dans la pièce réceptrice.

11. Gamme de fabrication selon la revendication 1, **caractérisée en ce que** l'arbre présente dans la région A une rainure hélicoïdale, donc une rainure s'étendant en hélice le long de la circonférence, pour la compensation de pression ou l'évacuation d'air, notamment lors de l'emmanchement de l'arbre dans la pièce réceptrice.

12. Gamme de fabrication selon la revendication 1, **caractérisée en ce que** l'arbre n'est pas moleté dans la région C, mais la denture de la région F est également pratiquée dans la région C, ou bien les évidements formés par les entredents de la denture de la région F s'étendent également dans la région C dans leurs zones de base, donc il est prévu une troisième variante.

13. Gamme de fabrication selon la revendication 1, **caractérisée en ce que** la longueur axiale de la région A2 est inférieure ou égale à la longueur axiale de la région H' de la pièce réceptrice.

14. Gamme de fabrication selon la revendication 1, **caractérisée en ce que** la longueur axiale de la région A2 plus la longueur axiale de la région B est inférieure ou égale à la longueur axiale de la région H' de la pièce réceptrice.

15. Gamme de fabrication selon la revendication 1, **caractérisée en ce que** le nombre N de dents du moletage dans la région C est l'un de trois nombres voisins n, n+1, n-1 qui présente chacun au moins deux facteurs premiers, sachant que le nombre Z de dents de la denture dans la région F présente au moins un facteur premier commun avec chacun des trois nombres voisins n, n+1, n-1.

16. Arbre à fixer dans un perçage d'une pièce réceptrice, **caractérisé en ce que**
a) chaque arbre possède au moins cinq régions axiales A, B, C, D et F, qui sont contiguës dans l'ordre alphabétique des lettres qui les désignent et parmi lesquelles F possède un plus grand diamètre extérieur que A, B et/ou C ;
b) la région C de l'arbre est dentée ou moletée ;
c) l'arbre n'est pas denté dans les régions D, A et B ;
d) le perçage de la pièce réceptrice est divisé au moins en trois régions axialement contiguës G', H' et J', sachant que la région G' est associée à la région A de l'arbre fixé dans la pièce réceptrice et la région H' à la région C de l'arbre fixé dans la pièce réceptrice, et que la région J' fait suite à la région H' ;
e) le perçage de la pièce réceptrice présente dans la région G' un diamètre intérieur qui est mathématiquement supérieur ou égal à une valeur d ;
f) la région A de l'arbre comprend la région partielle A1 côté pièce réceptrice et la région partielle A2 qui fait suite à la précédente, sachant que la région partielle A1 présente un diamètre extérieur qui est inférieur ou égal au diamètre d de la région G' de telle sorte, et que le diamètre extérieur de la région partielle A2 est supérieur ou égal au diamètre extérieur de la région partielle A1 de telle sorte, qu'on obtient une liaison à force lorsque l'arbre est emmanché dans la pièce réceptrice ;
g) la région B de l'arbre fait suite à la région A2 et la région C fait suite à la région B, sachant que le diamètre extérieur de la région B est inférieur au diamètre extérieur de la région C ;
h) lorsque l'arbre est emmanché dans la pièce réceptrice, il s'incise en engagement positif dans la région H' du perçage par sa région dentée ou moletée C.

17. Arbre à fixer dans un perçage d'une pièce réceptrice, **caractérisé en ce que**
a) chaque arbre possède au moins cinq régions axiales A, B, C, D et F, qui sont contiguës dans l'ordre alphabétique des lettres qui les désignent et parmi lesquelles F possède un plus grand diamètre extérieur que A, B et/ou C ;
b) la région C de l'arbre est dentée ou moletée ;
c) les évidements formés par les entredents de la denture de la région F s'étendent dans leurs zones de base à travers les régions D et C et au moins partiellement aussi dans la région B ou dans les régions B et A de l'arbre ;
d) le perçage de la pièce réceptrice est divisé au moins en trois régions axialement contiguës G', H' et J', sachant que la région G' est associée à la région A de l'arbre fixé dans la pièce réceptrice et la région H' à la région C de l'arbre fixé dans la pièce réceptrice, et que la région J' fait suite à la région H' ;
e) le perçage de la pièce réceptrice présente dans la région G' un diamètre intérieur qui est mathématiquement supérieur ou égal à une valeur d ;
f) la région A de l'arbre comprend la région partielle A1 côté pièce réceptrice et la région partielle A2 qui fait suite à la précédente, sachant que la région partielle A1 présente un diamètre extérieur qui est inférieur ou égal au diamètre d de la région G' de telle sorte, et que le diamètre extérieur de la région partielle A2 est supérieur ou égal au diamètre extérieur de la région partielle A1 de telle sorte, qu'on obtient une liaison à force lorsque l'arbre est emmanché dans la pièce réceptrice ;
g) la région B de l'arbre fait suite à la région A2 et la région C fait suite à la région B, sachant que le diamètre extérieur de la région B est inférieur au diamètre extérieur de la région C ;
h) lorsque l'arbre est emmanché dans la pièce réceptrice, il s'incise en engagement positif dans la région H' du perçage par sa région dentée ou moletée C.

18. Procédé de réalisation d'une fixation d'arbre selon au moins une des revendications précédentes, sachant que, pendant l'enfoncement et/ou l'emmanchement, une température de la pièce réceptrice, notamment à l'intérieur de celle-ci, et une température de l'arbre, notamment à l'intérieur de celui-ci, sont inégales.

19. Procédé selon au moins une des revendications précédentes, **caractérisée en ce que** la température de la pièce réceptrice et la température de l'arbre différent de plus de 60 Kelvin.
